**Europäisches Patentamt**

**European Patent Office**

**Office européen des brevets**

(19)

(11) Publication number : **0 326 612 B1**

# (12) EUROPEAN PATENT SPECIFICATION

(45) Date of publication of patent specification :
**10.03.93 Bulletin 93/10**

(51) Int. Cl.⁵ : **G02B 26/06, G02F 1/11**

(21) Application number : **88908805.0**

(22) Date of filing : **05.07.88**

(86) International application number :
**PCT/US88/02247**

(87) International publication number :
**WO 89/01644 23.02.89 Gazette 89/05**

(54) **OPTICAL NOTCH FILTER FOR DISCRIMINATING AGAINST COHERENT RADIATION.**

(30) Priority : **10.08.87 US 83410**

(43) Date of publication of application :
**09.08.89 Bulletin 89/32**

(45) Publication of the grant of the patent :
**10.03.93 Bulletin 93/10**

(84) Designated Contracting States :
**DE FR GB IT NL**

(56) References cited :
**EP-A- 0 162 595**
**DE-A- 3 432 566**
**DE-C- 2 928 205**

(56) References cited :
**GB-A- 2 138 584**
**US-A- 3 799 652**
**US-A- 3 941 456**
**US-A- 4 443 066**

(73) Proprietor : **Hughes Aircraft Company**
**7200 Hughes Terrace P.O. Box 45066**
**Los Angeles, California 90045-0066 (US)**

(72) Inventor : **O'MEARA, Thomas, R.**
**5961 Floris Heights**
**Malibu, CA 90265 (US)**

(74) Representative : **KUHNEN, WACKER &**
**PARTNER**
**Alois-Steinecker-Strasse 22 Postfach 1553**
**W-8050 Freising (DE)**

**Description**

BACKGROUND OF THE INVENTION

Field of the Invention

This invention relates to the processing of optical beams, and more particularly to a system and a method for filtering out coherent radiation from an input beam.

Description of the Related Art

Optical beams may be presented as a combination of coherent and noncoherent radiation, and it is sometimes desirable to remove the coherent components. When a light wave exhibits complete coherence, there is a predictable connection or correlation between the amplitude and phase at any one point in the beam and at any other point. In general, a cross-section of the beam will reveal a wave front, every portion of which is in-phase with every other portion. With noncoherent radiation, on the other hand, the frequency, phase and amplitude at any point in the beam is random with respect to other points.

Notch filters have been used in a variety of applications to remove signal components with a given frequency, or falling within a relatively narrow frequency band, from an overall signal. Notch filters have been developed for optical radiation uses, and have been employed to remove coherent radiation from a beam. However, presently available optical notch filters are passive devices in the sense that, while they may be tuned to different frequencies, once they are set their tuning remains fixed and they do not respond to dynamics within the beam. Thus, the filters will not respond if they are originally set to the frequency of the coherent radiation, but the frequency of the coherent radiation within the beam thereafter changes. Also, the coherent radiation frequency may be unknown, and the presence or absence of coherent radiation may itself also be unknown. In these situations present filters are ineffective.

EP-A-0 162 595 discloses a system in which coherent radiation is modified in such a manner that the spatial coherence is removed without disturbing the frequency coherence.

SUMMARY OF THE INVENTION

In view of the above problems with the prior art, the object of the present invention is to provide a novel and improved system and method for an optical beam which is capable of detecting the presence of coherent radiation within the beam, determining the frequency of the detected coherent radiation, and dynamically responding to remove the coherent radiation from the beam.

These objects are achieved by providing an optical filter that is adapted to discriminate against a selectable frequency, and positioning the filter to receive at least a portion of an input beam. Means are provided to detect the presence of coherent radiation in the beam, to determine its frequency, and to dynamically set the filter to discriminate against the coherent radiation, whereby the filter removes the coherent component of the beam and transmits the non-coherent components. In the preferred embodiment, a portion of the beam is diverted to an interferometer, which divides the diverted portion into two paths of unequal length and beats the paths against each other. The interferometer includes a mechanism for detecting any resulting interference fringe patterns, indicating the presence of coherent radiation. The fringe pattern is analyzed to determine the frequency of the coherent radiation, and a control signal is developed to dynamically set the filter to the coherent frequency.

The filter is preferably a Bragg cell which responds to an acoustic control signal. With this type of filter, an electrical control signal is generated which represents the detected frequency of the coherent radiation, and an electro-acoustic transducer operates in response to the electrical control signal to provide an acoustic control signal to the Bragg cell. The control signals respond dynamically to changes in the coherent component of the input beam, causing the Bragg cell to track the coherent radiation and continue filtering it despite any wavelength variations which may be introduced.

These and other features and objects of the invention will be apparent to those skilled in the art from the following detailed description of preferred embodiments, taken together with the accompanying drawings, in which:

DESCRIPTION OF THE DRAWINGS

FIG. 1 is a block diagram of a system for removing coherent radiation from an input optical beam, constructed in accordance with the invention;

FIG. 2 is a diagram of one form of interferometer that may be used to detect the presence of coherent radiation in the beam;

FIGS. 3a and 3b are representations of interference patterns formed by the interferometer in response to two different coherent radiation frequencies; and

FIG. 4 is a diagram of an alternate form of interferometer that can be used with the dynamic filter of the present invention.

DETAILED DESCRIPTION OF PREFERRED EMBODIMENTS

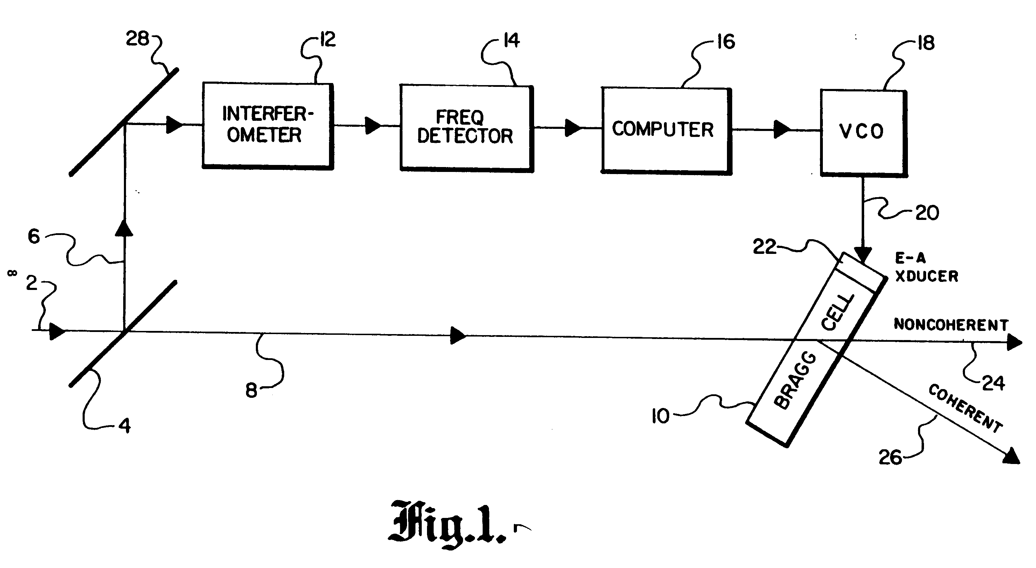

A preferred form of the invention is illustrated in FIG. 1. An input optical beam 2, which may have been transmitted through a receiving aperture (not shown), is directed onto a beam splitter 4, which may be provided as a partially silvered mirror. Beam 2 in general has noncoherent components and may also have coherent components; the system of FIG. 1 is structured to detect the coherent component, even though it may vary in frequency and be present only intermittently, and to remove it from the overall beam. For purposes of this application the term "optical" is intended in its broad sense to include not just visible light, but also infra-red radiation and other regions of the electromagnetic spectrum at which coherent beams may be transmitted.

The input beam is divided by beam splitter 4 into two resultant beams, one of the sub-beams 6 being directed to a coherency detection system. The other sub-beam 8 is directed to an optical filter 10, which removes coherent radiation from the beam in response to a control signal from the coherence detection system. Since the frequency of any coherent radiation is not known in advance, it is difficult to use an efficient dichroic beam splitter, and impossible to do so during transient start-up. Accordingly, beam splitter 4 is preferably implemented as a fixed wavelength independent splitter, which preferably gives most of the beam photons to the sub-beam 8 transmitted to filter 10.

The subsystem which detects coherent radiation within the input beam and provides a control signal to filter out such radiation consists of a coherency detector 12, preferably in the form of an interferometer, a frequency detector 14 which provides an indication of the frequency of any coherent radiation in the input beam, an analog or digital computer which computes the frequency control policy for the filter 10 in response to the detected coherent frequency, and a frequency control circuit such as voltage control oscillator (VCO) 18. The VCO accepts the computer output and converts it to an electrical sinusoidal signal, on control line 20, having a frequency which corresponds to the detected coherent radiation frequency. The VCO block can be a series of VCOs or phase locked loops whose sinusoidal output signal is set to produce Bragg deflection at one or more estimated coherent radiation wavelength.

The Bragg cell filter 10 is an acousto-optic cell which is both optically and acoustically transparent, and operates with moving diffraction gratings. An electro-acoustic transducer 22 receives the electrical control signal on line 20 and converts it to an acoustic signal which propagates down the Bragg cell to set up its diffraction grating. With the Bragg cell set at a frequency corresponding to the detected coherent radiation frequency by the described control system, it deflects the portion of its input sub-beam 8 which is at the coherent radiation frequency, and transmits the remainder of the input beam. Thus, the noncoherent portion of the beam is transmitted through the cell to emerge as output beam 24, while the coherent radiation is filtered out of the main beam path as a deflected beam 26. Since the diffraction efficiency of a Bragg cell is limited, several cells may be operated in tandem to remove successively larger portions of the coherent radiation power.

Bragg cells are well known, and are described in text books, for example, "Introduction to Optical Electronics," A. Yariv, 2nd Edition, pp. 340-352. They are preferred because of their favorable diffraction efficiency. As an alternate to a Bragg cell, it might be possible to use a real time hologram. This is a device under development which deflects beams at different angles, according to their frequencies. It is not as useful in this application as a programmable coherent beam extractor, since it is a thin film device which exhibits poor diffraction efficiency.

With coherent radiation in the form of laser beams, the acoustic signal produced by electro-acoustic transducer 22 is typically in the range of about 10-40 MHz, depending upon the laser frequency and the angular orientation of the system. Thus both the computer 16 and the voltage controlled oscillator circuit 18 must be capable of high speed operation.

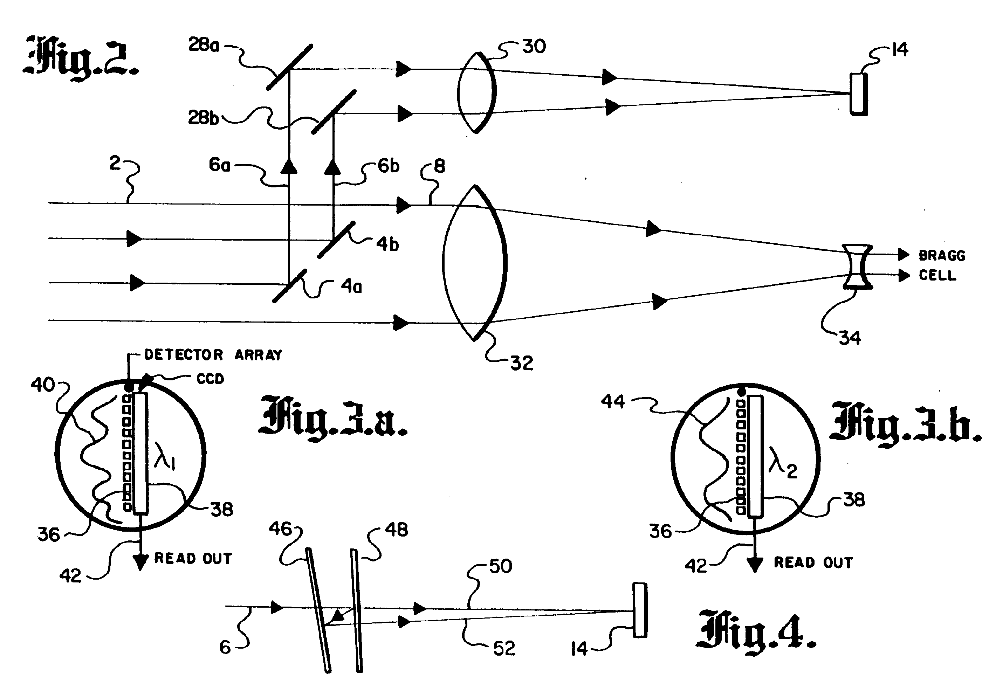

The sub-beam 6 to be analyzed for coherent radiation is deflected off a mirror 28 into the interferometer 12. Numerous different interferometer designs may be used; one suitable design is shown in FIG. 2. In this design the beam splitter 4 is implemented as a pair of small mirrors 4a and 4b within the periphery of input beam 2. They deflect respective minor portions of the input beam along parallel paths to respective mirrors 28a, 28b, from which the sub-beams are again reflected along new parallel paths to a focusing lens 30. The lens focuses the sub-beam to a common point at frequency detector 14, which is located at the focal length of the lens. The remainder of the input beam is transmitted as beam 8 to another lens 32, which partially focuses the beam to a collimating lens 34 and then to the Bragg cell.

The interferometer system shown in FIG. 2 is a "thinned-array" imaging system, in which the path lengths of the two sampled beams 6a and 6b are deliberately mismatched. If the path lengths are properly designed, any coherent components of the sampled beams will produce an interference fringe pattern at spatial frequency detector 14. The frequency of the coherent radiation can then be determined, based upon the fringe pattern.

The difference in the path lengths for the two sub-beams 6a and 6b must be between the coherence lengths for the anticipated coherent radiation, and the noncoherent radiation. For small path differentials, the fringe visibility for coherent radiation will remain high. As the differential increases, however, fringe visibility decreases until ultimately a path differential is reached at which the fringes disappear completely. This differential distance is defined as the coherence length of the radiation being analyzed. The coherence length for coherent laser radiation is much greater than that for a non-coherent broad band source, generally in the order of centimeters or meters for a laser as compared to microns for noncoherent light.

An implementation of the frequency detector 14 is shown in FIG. 3a. An optical detector array 36 is provided on a charge coupled device substrate 38. The spatial frequency is encoded on the detector as an amplitude distribution 40 corresponding to the wavelength of the coherent radiation. The sensed amplitude distribution is provided as a output from the frequency detector over line 42, generally as a temporal sequence, to the computer 16. The computer estimates one or more spatial period values Λ and one or more wavelength values λ via the relationship:

$$\lambda = \Lambda \, 2 \sin \theta/2$$

where θ is the separation angle between the beams as illustrated in FIG. 2.

The amplitude distribution 44 for a different coherent radiation frequency is illustrated in FIG. 3b.

A second form of interferometer which may be used with the invention is a tilt plate shearing interferometer illustrated in FIG. 4. With this device a single sub-beam 6 is transmitted through a tilted one-way mirror 46 to a beam splitter 48. The planes of beam splitter 48 and one-way mirror 46 are angled to each other, such that a portion of the beam is transmitted through the beam splitter onto frequency detector 14 as a first sub-beam 50, while the remainder of beam 6 is re-directed back to the reflective side of one-way mirror 46, from whence it is reflected back through the beam splitter to frequency detector 14 as sub-beam 52. The two sub-beams 50 and 52 are close to parallel, with the spacing an angle between beam splitter 48 and one-way mirror 46 determining the required coherence length conditions. This system is appropriate for very short coherence length lasers, and has the advantage that alignment is easily maintained. Fringe contrast is somewhat lower than for the system of FIG. 2, but with a fringe contrast ratio of about 0.94 it is still sufficiently high.

The described system can be used to remove either one or a number of different coherent radiation frequencies from a received field, while passing incoherent radiation substantially without attenuation. Its response time will typically be limited by the signal-/noise ratio of the detected coherent signal. The stronger the coherent signal, the faster is the system response, down to time responses in the order of microseconds. At this point, several individual component response times can typically limit the overall system response time. Unlike optical limiters, there is no requirement that the coherent signal intensity exceed that of the noncoherent source. Thus, the present system may be a natural complement to an optical limiter. The limiter could accept a very high intensity coherent source and limit its output to perhaps a factor of 10 or 100 times the noncoherent intensity. The present invention could then provide additional attenuation, bringing the coherent signal down to intensity levels comparable to or lower than the noncoherent signal level.

While particular embodiments of the invention have been shown and described, it should be understood that numerous variations and alternate embodiments will occur to those skilled in the art. Accordingly, it is intended that the invention be limited only in terms of the appended claims.

**Claims**

1. A system for filtering out coherent radiation from an input beam (2) having coherent and noncoherent radiation components, comprising:
   an optical filter (10) adapted to discriminate against a selectable frequency and received at least a first portion of the input beam (2),
   a detector means (12, 14) positioned to receive at least a second portion of the beam, said detector means (12, 14) determining the presence and the frequency of coherent radiation in the beam, and
   means (16, 18, 22) responsive to the detector means for providing a control signal to the optical filter (10) which causes the optical filter (10) to filter the coherent radiation from at least said first portion of the input beam (2) and transmit other radiation.

2. The system of claim 1, wherein the detector means (12, 14) comprises an interferometer (12) positioned to receive at least said second portion of the beam, the interferometer producing an interference fringe pattern for coherent radiation, and means (14) responsive to the interference fringe pattern for determining the frequency of the coherent radiation.

3. The system of claim 1 or 2, wherein the optical filter (10) comprises a plurality of Bragg cells operated in tandem to receive at least said first portion of the input beam, each Bragg cell being controlled by a similar acoustic control signal.

4. The system of claim 1 or 2, wherein the filter (10) comprises a Bragg cell.

5. The system of claim 2 and 4, wherein the frequency determining means (14) comprises means for establishing an electrical discrimination signal (20) with a selected frequency, and the control signal providing means (16, 18, 22) comprises an electro-acoustic transducer (22) adapted to provide an acoustic control signal to the Bragg cell in response to the elctrical discrimination signal (20).

6. The system of any one of claims 2 to 5, comprising a beam splitter (4) adapted to direct respective portions of the input optical beam (2) to the filter (10) and to the interferometer (12).

7. The system of any one of claims 2 to 6, wherein the interferometer (14) is adapted to divide at least said second portion of the beam (2) into two paths (6a, 6b, 50, 52) of different lengths, and to thereafter bring the paths together to establish an interference fringe pattern for coherent radiation in the two paths, the difference in the path lengths being between the coherence lengths for coherent and noncoherent radiation.

8. A method for removing coherent radiation from a beam (2) having a combination of coherent and noncoherent radiation, comprising:
    segregating a portion of the beam (2),
    detecting the presence of coherent radiation in the segregated beam portion,
    determining the frequency of the detected coherent radiation,
    generating a control signal representative of the coherent radiation,
    applying the rest of the beam (2) to a frequency sensitive filter (10) and
    controlling the filter (10) with the control signal to remove the coherent radiation from the beam (2).

9. The method of claim 8, wherein the filter (10) is a Bragg cell, the control signal is generated as an electrical signal which corresponds to the coherent frequency radiation, and the electrical control signal (20) is transduced to an acoustic signal for application to the Bragg cell.

10. The method of claim 8 or 9, wherein the presence of coherent radiation is detected by means of an interferometer (12) and the frequency of the detected coherent radiation is determined in dependance on an interference fringe pattern generated by the interferometer (12).

**Patentansprüche**

1. System zum Ausfiltern kohärenter Strahlung aus einem eingegebenen Strahl (2) mit kohärenten und nicht kohärenten Strahlungskomponenten, mit
    einem optischen Filter (10), das zur Diskriminierung bzw. Unterscheidung einer wählbaren Frequenz ausgelegt ist und zumindest einen ersten Anteil des eingegebenen Strahls (2) empfängt,
    einer Detektoreinrichtung (12, 14), die zum Empfangen zumindest eines zweiten Anteils des Strahls positioniert ist, wobei die Detektoreinrichtung (12, 14) das Vorhandensein und die Frequenz kohärenter Strahlung in dem Strahl bestimmt, und
    einer Einrichtung (16, 18, 22), die auf die Detektoreinrichtung für das Anlegen eines Steuersignals an das optische Filter (10) anspricht, das das optische Filter (10) zur Ausfilterung der kohärenten Strahlung aus zumindest dem ersten Anteil des eingegebenen Strahls (2) und zur Übertragung anderer Strahlung veranlaßt.

2. System nach Anspruch 1, bei dem die Detektoreinrichtung (12, 14) ein Interferometer (12), das für den Empfang zumindest des zweiten Anteils des Strahls angeordnet ist, wobei das Interferometer ein Interferenzstreifenmuster für kohärente Strahlung erzeugt, und eine Einrichtung (14) aufweist, die auf das Interferenzstreifenmuster zur Bestimmung der Frequenz der kohärenten Strahlung anspricht.

3. System nach Anspruch 1 oder 2, bei dem das optische Filter 10 eine Vielzahl von Bragg-Zellen aufweist, die in Tandem-Betrieb für den Empfang zumindest des ersten Anteils des eingegebenen Strahls betrieben werden, wobei jede Bragg-Zelle durch ein gleichartiges akustisches Steuersignal gesteuert wird.

4. System nach Anspruch 1 oder 2, bei dem das Filter (10) eine Bragg-Zelle aufweist.

5. System nach Anspruch 2 und 4, bei dem die Frequenzbestimmungseinrichtung (14) eine Einrichtung zum Bereitstellen eines elektrischen Unterscheidungssignals (20) mit einer gewählten Frequenz aufweist, und bei dem die Steuersignal-Bereitstellungseinrichtung (16, 18, 22) einen elektroakustischen Wandler (22) umfaßt, der zur Erzeugung eines akustischen Steuersignals für die Bragg-Zelle in Reaktion auf das elektrische Unterscheidungssignal (20) ausgelegt ist.

6. System nach einem der Ansprüche 2 bis 5, mit einem Strahlteiler (4), der dazu ausgelegt ist, jeweilige Anteile des eingegebenen optischen Strahls (2) zu dem Filter (10) und zu dem Interferometer (12) zu richten.

7. System nach einem der Ansprüche 2 bis 6, bei dem das Interferometer (14) zur Aufteilung zumindest des zweiten Anteils des Strahls (2) in zwei Pfade (6a, 6b, 50, 52) unterschiedlicher Längen und zur nachfolgenden Zusammenbringung der Pfade für die Ausbildung eines Interferenzstreifenmusters für kohärente Strahlung in den beiden Pfaden ausgelegt ist, wobei der Unterschied in den Pfadlängen zwischen den Kohärenzlängen für kohärente und nicht kohärente Strahlung liegt.

8. Verfahren zum Beseitigen kohärenter Strahlung aus einem Strahl (2), der eine Kombination aus kohärenter und nicht kohärenter Strahlung aufweist, mit

Abtrennen eines Anteils des Strahls (2)

Erfassen des Vorhandenseins kohärenter Strahlung in dem abgetrennten Anteil des Strahls,

Bestimmen der Frequenz der erfaßten kohärenten Strahlung,

Erzeugen eines Steuersignals, das für die kohärente Strahlung repräsentativ ist,

Anlegen des restlichen Teils des Strahls (2) an ein frequenzempfindliches Filter (10), und

Steuern der Filters (10) durch das Steuersignal zur Beseitigung der kohärenten Strahlung aus dem Strahl (2).

9. Verfahren nach Anspruch 8, bei dem das Filter (10) eine Bragg-Zelle ist, das Steuersignal als ein elektrisches Signal, das der kohärenten Strahlungsfrequenz entspricht, erzeugt wird, und das elektrische Steuersignal (20) in ein akustisches Signal für das Anlegen an die Bragg-Zelle umgewandelt wird.

10. Verfahren nach Anspruch 8 oder 9, bei dem das Vorhandensein kohärenter Strahlung mittels eines Interferometers (12) erfaßt wird und die Frequenz der erfaßten kohärenten Strahlung in Abhängigkeit von einem Interferenzstreifenmuster, das durch das Interferometer (12) erzeugt wird, bestimmt wird.

**Revendications**

1. Système pour retirer par filtrage un rayonnement cohérent d'un faisceau d'entrée (2) ayant des composantes de rayonnement cohérente et non cohérente, comportant :

un filtre optique (10) conçu pour réaliser une discrimination à l'encontre d'une fréquence pouvant être choisie et recevant au moins une première partie du faisceau d'entrée (2),

un moyen détecteur (12, 14) placé de façon à recevoir au moins une seconde partie du faisceau, ledit moyen détecteur (12, 14) déterminant la présence et la fréquence d'un rayonnement cohérent dans le faisceau, et

des moyens (16, 18, 22) qui, en réponse au moyen détecteur, sont destinés à appliquer un signal de commande au filtre optique (10) qui amène le filtre optique (10) à retirer par filtrage le rayonnement cohérent d'au moins ladite première partie du faisceau d'entrée (2) et à transmettre l'autre rayonnement.

2. Système selon la revendication 1, dans lequel le moyen détecteur (12, 14) comprend un interféromètre (12) placé de façon à recevoir au moins ladite seconde partie du faisceau, l'interféromètre produisant une figure de franges d'interférence pour un rayonnement cohérent, et un moyen (14) qui, en réponse à la figure de franges d'interférence, est destiné à déterminer la fréquence du rayonnement cohérent.

3. Système selon la revendication 1 ou 2, dans lequel le filtre optique (10) comporte plusieurs cellules de Bragg mises en oeuvre en tandem de façon à recevoir au moins ladite première partie du faisceau d'entrée, chaque cellule de Bragg étant commandée par un signal de commande acoustique similaire.

4. Système selon la revendication 1 ou 2, dans lequel le filtre (10) comprend une cellule de Bragg.

5. Système selon les revendications 2 et 4, dans lequel le moyen (14) de détermination de fréquence comprend un moyen destiné à établir un signal de discrimination électrique (20) d'une fréquence choisie, et les moyens (16, 18, 22) produisant un signal de commande comprennent un transducteur électro-acoustique (22) destiné à appliquer un signal de commande acoustique à la cellule de Bragg en réponse au signal de discrimination électrique (20).

6. Système selon l'une quelconque des revendications 2 à 5, comportant un diviseur (4) de faisceau conçu pour diriger des parties respectives du faisceau optique d'entrée (2) vers le filtre (10) et vers l'interféromètre (12).

7. Système selon l'une quelconque des revendications 2 à 6, dans lequel l'interféromètre (14) est conçu pour diviser au moins ladite seconde partie du faisceau (2) suivant deux trajets (6a, 6b, 50, 52) de longueurs différentes, et pour rassembler ensuite les trajets afin d'établir une figure de franges d'interférence pour un rayonnement cohérent dans les deux trajets, la différence de longueurs des trajets étant comprise entre les longueurs de cohérence pour un rayonnement cohérent et un rayonnement non cohérent.

8. Procédé pour retirer un rayonnement cohérent d'un faisceau (2) ayant une combinaison de rayonnements cohérent et non cohérent, consistant :

à isoler une partie du faisceau (2),

à détecter la présence d'un rayonnement cohérent dans la partie de faisceau isolée,

à déterminer la fréquence du rayonnement cohérent détecté,

à générer un signal de commande représentatif du rayonnement cohérent,

à appliquer le reste du faisceau (2) à un filtre (10) sensible à la fréquence, et

à commander le filtre (10) à l'aide du signal de commande pour retirer le rayonnement cohérent du faisceau (2).

9. Procédé selon la revendication 8, dans lequel le filtre (10) est une cellule de Bragg, le signal de commande est généré en tant que signal électrique qui correspond au rayonnement de fréquence cohérent, et le signal de commande électrique (20) est transformé en un signal acoustique pour être appliqué à la cellule de Bragg.

10. Procédé selon la revendication 8 ou 9, dans lequel la présence d'un rayonnement cohérent est détectée au moyen d'un interféromètre (12) et la fréquence du rayonnement cohérent détecté est déterminée en fonction d'une figure de franges d'interférence générée par l'interféromètre (12).

**Fig.1.**

Fig.2.

Fig.3.a.

Fig.3.b.

Fig.4.